# EUROPÄISCHE PATENTSCHRIFT

(11) **EP 0 794 085 B1**
(45) Veröffentlichungstag und Bekanntmachung des Hinweises auf die Patenterteilung: **06.11.2002**
(21) Anmeldenummer: 97103487.1
(22) Anmeldetag: 04.03.1997
(51) Int. Cl.: B60N 2/48, B60N 2/42

(54) **Fahrzeugsitz**
Vehicle seat
Siège de véhicule

(30) Priorität: 04.03.1996 DE 29603991 U; 03.06.1996 DE 29609786 U
(43) Veröffentlichungstag der Anmeldung: 10.09.1997
(73) Patentinhaber: TRW Occupant Restraint Systems GmbH & Co. KG, 73551 Alfdorf (DE)
(72) Erfinder: Heilig, Alexander, 73550 Wissgoldingen (DE); Maiwald, Helmut, 73579 Schechingen (DE)
(74) Vertreter: Kitzhofer, Thomas, Dipl.-Ing.

(56) Entgegenhaltungen:
- EP-A- 0 627 340
- WO-A-96/06752
- DE-A- 2 948 224
- US-A- 3 802 737
- US-A- 4 040 661

## Beschreibung

Die Erfindung betrifft einen Fahrzeugsitz gemäß dem Oberbegriff des Anspruchs 1.

Die Kopfstütze eines Fahrzeugsitzes hat die Aufgabe, bei einem Heckaufprall den Kopf des Insassen nach hinten abzustützen. Da jedoch normalerweise zwischen der Kopfstütze und dem Kopf des Insassen ein relativ großer Abstand vorhanden ist, wird bei einem Heckaufprall zunächst der Kopf des Insassen relativ zum Fahrzeugsitz nach hinten geschleudert, bis er auf der Kopfstütze auftrifft. Dies bewirkt eine Scherbewegung im Nackenwirbelbereich, die häufig ein Schleudertrauma verursacht.

Aus der WO96/06752 ist eine gattungsgemäße Vorrichtung bekannt, durch die bei einem Fahrzeugaufprall die Kopfstütze zum Kopf eines Fahrzeuginsassen hin bewegt wird. Im Inneren der Rückenlehne ist eine Feder angeordnet, die bei einem Aufprall entspannt wird, wobei eine Verlagerung der Kopfstütze bewirkt wird. Gleichzeitig wird ein an der Rückenlehne angeordnetes Gewebestück zwischen der Kopfstütze und dem unteren Ende der Rückenlehne gespannt, das dazu dient, den Fahrzeuginsassen aufzufangen.

Die Erfindung schafft einen einfach und zuverlässig aufgebauten Fahrzeugsitz, der weitgehend verhindert, daß der Kopf bei einem Heckaufprall nach hinten geschleudert wird.

Dies wird bei einem Fahrzeugsitz der eingangs angegebenen Art erfindungsgemäß durch die Merkmale des Anspruchs 1 gelöst. Der erfindungsgemäße Fahrzeugsitz mit seinem integrierten Verstellmechanismus für die Kopfstütze samt dem biegsamen Zugelement zeichnet sich durch einen einfachen, zuverlässigen Aufbau aus.

Das biegsame Zugelement ist vorzugsweise ein Band oder eine Gewebeeinlage, die im Sitz üblicherweise zwischen zwei Befestigungen gespannt ist.

Bei einer Ausführungsform ist die Kopfstütze schwenkbar gelagert und das Zugelement so angelenkt, daß es die Kopfstütze im Kollisionsfall zum Kopf des Insassen schwenkt, wobei die Schwenklagerung in der Kopfstütze integriert sein kann und das Zugelement an der Kopfstütze selbst oder an einem daran gekoppelten Hebel befestigt ist. Der so geschaffene, über das biegsame Zugelement betätigbare Verstellmechanismus ist sehr robust.

Gemäß einer hierzu alternativen Ausführungsform umfaßt der Verstellmechanismus eine Führung für die längs der Führung verstellbare Kopfstütze, wobei die Führung beispielsweise als in der Rückenlehne eingebaute Linearführung ausgebildet sein kann, in der die Kopfstütze gehaltert und die schräg aufwärts in Richtung Kopf des Insassen gerichtet ist. Dadurch ergibt sich eine schräg aufwärts zum Kopf des Insassen gerichtete Verstellbewegung der Kopfstütze.

Der sich verlagernde Massekörper kann die Rückenlehne umfassen, wobei die bei einem Heckaufprall vom Zugelement aufgenommene Bewegung eine Verschwenkung der Rückenlehne relativ zum Fahrzeug nach hinten ist. Die Rückenlehne muß dabei so verschwenkbar am Sitzteil befestigt sein, daß im normalen Fahrbetrieb, abgesehen von der üblichen Verschwenkung durch eine Rückenlehnenverstellung durch den Fahrzeuginsassen, eine ungewollte Verschwenkung ausgeschlossen ist und nur aufgrund der hohen, bei einem Heckaufprall auftretenden Kräfte im Bereich der Rückenlehne diese verschwenken kann.

Bei einer weiteren Ausführungsform ist ein relativ zum Fahrzeug beweglicher, translatorisch geführter Massekörper vorgesehen, an den das Zugelement gekoppelt ist. Während eines Fahrzeugaufpralls verschiebt sich der Massekörper längs seiner Führung relativ zum Fahrzeug nach hinten. Diese verstellbewegung wird durch das Zugelement zu deren kopfstützenseitiger Befestigung gelenkt, wo es zu einer Verschiebung der Befestigung führt.

Eine weitere Möglichkeit, die Verschiebung der kopfstützenseitigen Befestigung zu erreichen, besteht darin, eine Verschiebung des Fahrzeugsitzes bei einem Heckaufprall relativ zum Fahrzeug nach hinten zuzulassen und diese Bewegung durch das Zugelement aufzunehmen.

Ferner kann vorgesehen sein, daß das Zugelement durch das Innere der Rückenlehne gespannt ist, durch das Eindrücken des Insassen in die Rückenlehne bei einem Heckaufprall durchgebogen wird und so die Verschiebung der kopfstützenseitigen Befestigung des Zugelements hervorruft. Bei dieser Ausführung ist der träge Massekörper der Insasse selbst. Die Relativbewegung des Insassen zur Rückenlehne des Fahrzeugs bei einem Heckaufprall wird durch das gespannte Zugelement aufgenommen, das durch den Insassen durchgebogen wird.

Weitere Merkmale und Vorteile der Erfindung ergeben sich aus der folgenden Beschreibung verschiedener Ausführungsformen und aus den Zeichnungen, auf die Bezug genommen wird. In den Zeichnungen zeigen:
- Figur 1: eine teilweise geschnittene, schematische Seitenansicht des erfindungsgemäßen Fahrzeugsitzes im normalen Ruhezustand;
- Figur 2: den Fahrzeugsitz nach Figur 1 bei einem Heckaufprall;
- Figuren 3 und 4: entsprechende Ansichten einer zweiten Ausführungsform des erfindungsgemäßen Fahrzeugsitzes;
- Figuren 5 und 6: entsprechende Ansichten einer dritten Ausführungsform des erfindungsgemäßen Fahrzeugsitzes, bei der ein in einer geschlossenen Führung translatorisch verschiebbarer Massekörper vorgesehen ist;
- Figuren 7 und 8: entsprechende Ansichten einer vierten Ausführungsform des erfindungsgemäßen Fahrzeugsitzes, mit einer bei einem Heckaufprall verschwenkbaren Rückenlehne;
- Figuren 9 und 10: entsprechende Ansichten einer fünften Ausführungsform des erfindungsgemäßen Fahrzeugsitzes, bei der sich der Fahrzeugsitz bei einem Heckaufprall translatorisch relativ zum Fahrzeug nach hinten verschiebt;
- Figur 11: eine schematische Darstellung einer zu der in Fig. 1 gezeigten Schwenklagerung alternativen Lagerung der Kopfstütze; und
- Figur 12: eine weitere Lagerungsmöglichkeit für die Kopfstütze.

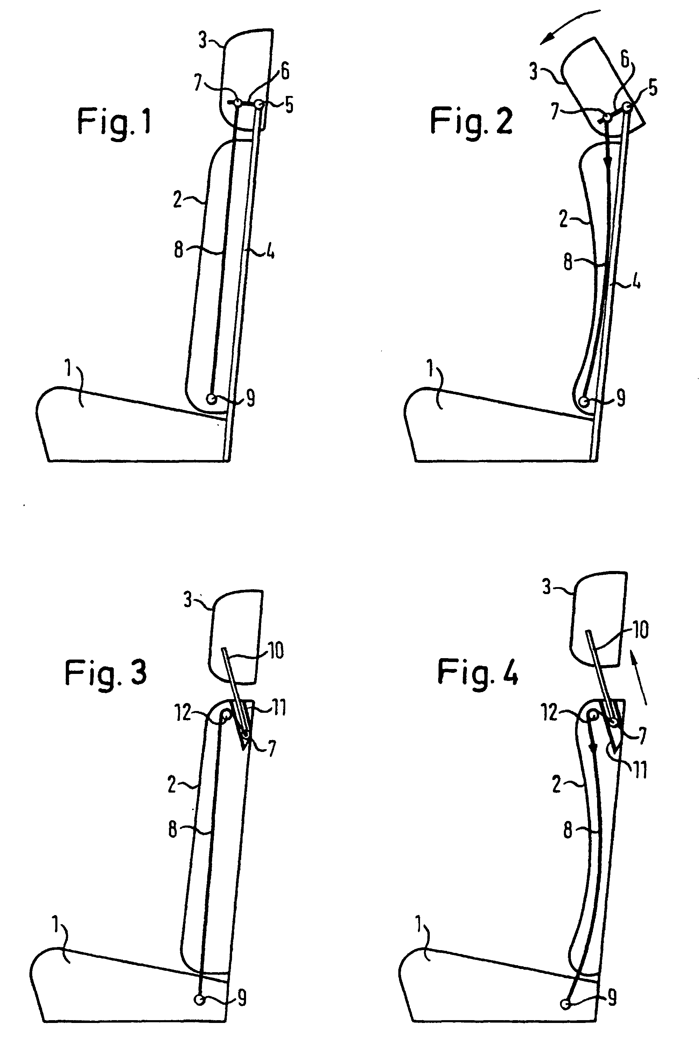

Figur 1 zeigt eine erste Ausführungsform eines Fahrzeugsitzes mit einem Sitzteil 1, einer Rückenlehne 2 und einer daran befestigten Kopfstütze 3, wie er bei normalem Fahrbetrieb durch einen nicht gezeigten Insassen belastet ist. Ein in der Rückenlehne 2 integrierter, aus dieser nach oben vorstehender Rahmen 4 hat ein oberes Ende mit einer Schwenklagerung 5, über die die Kopfstütze 3 mit dem Rahmen 4 verbunden ist. Ein ebenfalls an der Schwenklagerung 5 angelenkter und mit der Kopfstütze 3 gekoppelter Hebel 6 weist an einem Ende eine Befestigung 7 für ein biegsames Zugelement 8 in Form eines breiten Gewebebandes auf. Das Zugelement 8 erstreckt sich von seiner kopfstützenseitigen Befestigung 7 aus geradlinig gespannt hinter einem vorderen gepolsterten Rückenauflageteil durch das Innere der Rückenlehne 2 bis zum unteren Ende der Rückenlehne 2, wo es mit seinem fahrzeugbodenseitigen Ende 9 befestigt ist. Alternativ kann das Zugelement 8 auch am Sitzteil 1 befestigt werden, wie dies in den Figuren 3 und 4 gezeigt ist.

Bei einem Heckaufprall wirkt der Oberkörper des Fahrzeuginsassen als Massekörper und dringt aufgrund seiner Trägheit so tief in die Rückenlehne 2 ein, daß das Zugelement 8 in Richtung Fahrzeugheck durchgebogen und seine kopfstützenseitige Befestigung 7 nach unten geschwenkt wird, wodurch eine Verschwenkung der Kopfstütze 3 in Pfeilrichtung zum Kopf des Insassen um die Achse der Schwenklagerung 5 hervorgerufen wird, wie es in Figur 2 gezeigt ist. Die Befestigung 7 samt Hebel 6 und Schwenklagerung 5 bilden damit einen einfachen mechanischen Verstellmechanismus für die Kopfstütze 3, der die vom Zugelement 8 aufgenommene Bewegung des Oberkörpers über die Verschiebung der Befestigung 7 in eine Bewegung der Kopfstütze 3 umsetzt. Der Abstand des Kopfes von der Kopfstütze 3 wird dadurch aktiv verringert, bis dieser auf der Kopfstütze 3 auftrifft, so daß die maximal auftretende Scherbewegung zwischen Kopf und Oberkörper und die Beschleunigungswerte für den Kopf verringert werden.

Gemäß der in den Figuren 3 und 4 gezeigten zweiten Ausführungsform ist die Kopfstütze 3 über zwei an ihr arretierte, stangenartige Teile 10 mit der Rückenlehne 2 verbunden. Die stangenartigen Teile 10 ragen dabei in Führungen 11 in Form von Linearführungen in der Rückenlehne 2 und sind darin verschiebbar aufgenommen. Die Führungen 11 sind schräg aufwärts zum Kopf des Insassen gerichtet. Das untere Ende jedes stangenartigen Teils 10 weist eine Befestigung 7 für zwei obere Enden einer großflächigen Gewebeeinlage, die das Zugelement 8 bildet, auf. Die Gewebeeinlage erstreckt sich von den Befestigungen 7 aus im Inneren der Rückenlehne 2 schräg nach oben zu einer Umlenkung 12 und von dort aus durch das Innere der Rückenlehne 2 zum Sitzteil 1, an dem es befestigt ist. Die großflächige Gewebeeinlage ist dabei zwischen den beiden kopfstützenseitigen Befestigungen 7 und der Befestigung am Sitzteil 1 ausreichend gespannt, so daß bei einem Heckaufprall die in Figur 4 dargestellten Bewegungsabläufe vor sich gehen.

Der Oberkörper des Insassen wird tiefer in die Rückenlehne 2 eingedrückt, wodurch das Zugelement 8 nach hinten durchgebogen wird und die Befestigungen 7 schräg nach oben gezogen werden. Dadurch wird über die beiden stangenartigen Teile 10 die Kopfstütze 3 in der Führung 11 schräg nach oben zum Kopf des Fahrzeuginsassen geschoben, wodurch der Abstand der Kopfstütze 3 zum sich mit einer gewissen Verzögerung gegenüber dem Oberkörper nach hinten bewegenden Kopf verringert wird.

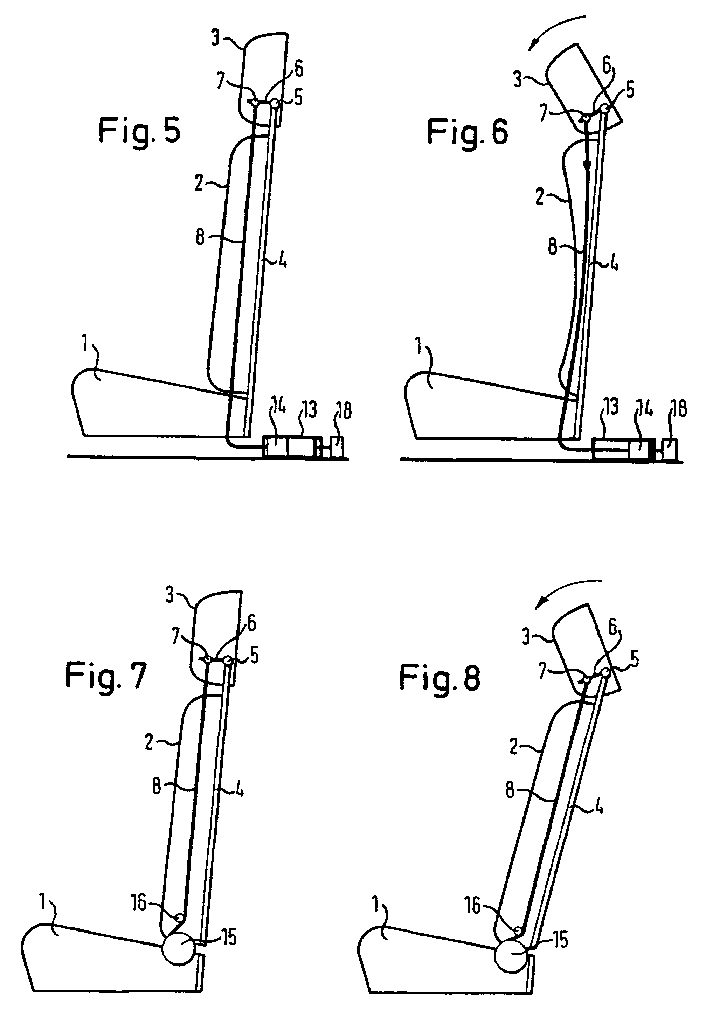

In der in den Figuren 5 und 6 gezeigten dritten Ausführungsform ist ein Massekörper 14 in einem Zylinder 13, der am Fahrzeugboden befestigt ist, translatorisch verschiebbar aufgenommen. Am Massekörper 14 ist das Zugelement 8 befestigt, das durch das Innere der Rückenlehne 2 gespannt ist. Für das Zugelement 8 vorgesehene Umlenkrollen, die am Sitzrahmen 4 befestigt sind, sind nicht dargestellt. Der Aufbau dieses Fahrzeugsitzes im Bereich der Rückenlehne 2 und der Kopfstütze 3 entspricht dem des in den Figuren 1 und 2 gezeigten Fahrzeugsitzes.

Bei einem Heckaufprall verlagert sich der Massekörper 14 im Zylinder 13 relativ zum Fahrzeug nach hinten, so daß das an ihm befestigte Zugelement 8 den Hebel 6 samt der Kopfstütze 3 entgegen dem Uhrzeigersinn schwenkt. Durch die träge Masse des Insassen, der bei einem Heckaufprall in die Rückenlehne 2 gedrückt wird, wird wie bei dem Fahrzeugsitz nach den Figuren 1 und 2 das Zugelement 8 durchgebogen. Dies unterstützt noch die Verschwenkung der Kopfstütze 3 nach vorn.

Die in den Figuren 7 und 8 gezeigte vierte Ausführungsform unterscheidet sich von den bisher gezeigten darin, daß die Rückenlehne 2 bei einem Heckaufprall relativ zum Fahrzeug nach hinten schwenkt. Ein Rückenlehnenverstellmechanismus 15 umfaßt ein nicht gezeigtes Drehlager und eine nicht gezeigte Kupplung. Die Kupplung ist so ausgebildet, daß sie bei den hohen Kräften, die bei einem Fahrzeugheckaufprall aufgrund der trägen Massen des Oberkörpers des Fahrzeuginsassen und der Rückenlehne 2 auftreten, eine Verschwenkung der Rückenlehne 2 relativ zum Fahrzeug nach hinten zuläßt. Das biegsame Zugelement 8 verläuft bei dieser Ausführungsform von seiner Befestigung 7 aus und in gespanntem Zustand durch das Innere der Rückenlehne 2 entlang eines an der Rückenlehne 2 befestigten Mitnehmers 16 bis zum Rückenlehnenverstellmechanismus 15, wo es an einem fahrzeugfesten Teil arretiert ist.

Bei einem Heckaufprall löst sich die im Rückenlehnenverstellmechanismus 15 integrierte Kupplung aufgrund der Summen der Trägheitskräfte des Oberkörpers des Fahrzeuginsassen und der Rückenlehne 2 samt Kopfstütze 3, und die Rückenlehne 2 schwenkt relativ zum Fahrzeug nach hinten. Bei dieser Schwenkbewegung verlagert der Mitnehmer 16 das Zugelement 8, indem er es bei der Schwenkbewegung weiter um einen zylindrischen Körper im Rückenlehnenverstellmechanismus 15 wickelt. Die Befestigung 7 wird durch diese Verlagerung nach unten bewegt und die Kopfstütze 3 entgegen dem Uhrzeigersinn geschwenkt. Auch bei dieser Ausführungsform ist es möglich, die Rückenlehne 2 so auszugestalten, daß der Oberkörper des Insassen das Zugelement 8 durchbiegt und die Verschwenkung der Kopfstütze 3 unterstützt.

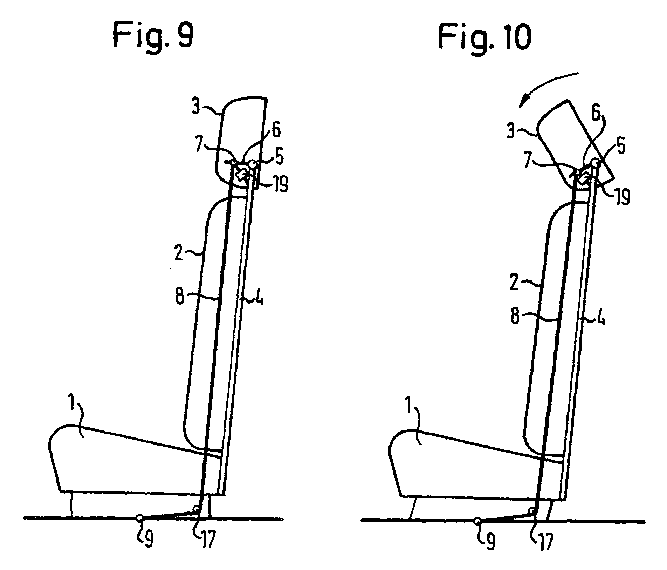

Bei der in den Figuren 9 und 10 gezeigten fünften Ausführungsform erstreckt sich das Zugelement 8 durch das Innere der Rückenlehne 2 und des Sitzteils 1 bis zum Boden des Fahrzeugs, an dem es mit seinem fahrzeugbodenseitigen Ende 9 befestigt ist. Ein Mitnehmer 17, der am Sitzrahmen befestigt ist, dient als Umlenker für das Zugelement 8. Der Fahrzeugsitz ist in einer Linearführung so im Fahrzeug gelagert, daß er sich nur bei einem Heckaufprall aufgrund der Trägheitskräfte, die durch den Sitz und den Fahrzeuginsassen hervorgerufen werden, relativ zum Fahrzeug selbsttätig translatorisch nach hinten verschieben kann. Dies kann beispielsweise dadurch erreicht werden, daß ein üblicher Mechanismus für die Verstellung des Fahrzeugsitzes in Fahrzeuglängsrichtung mit einer Kupplung oder einem Scherbolzen versehen ist, die dazu dienen, erst bei sehr hohen Kräften die Verschiebung des Fahrzeugsitzes zuzulassen.

Bei einem Heckaufprall verschiebt sich der Fahrzeugsitz relativ zum Fahrzeug nach hinten, so daß der Mitnehmer 17 am Zugelement 8 entlanggleitet und es über eine längere Strecke annähernd parallel zum Fahrzeugboden ausrichtet, wodurch die Befestigung 7 nach unten gezogen und die Kopfstütze 3 entgegen dem Uhrzeigersinn und nach vorn geschwenkt wird.

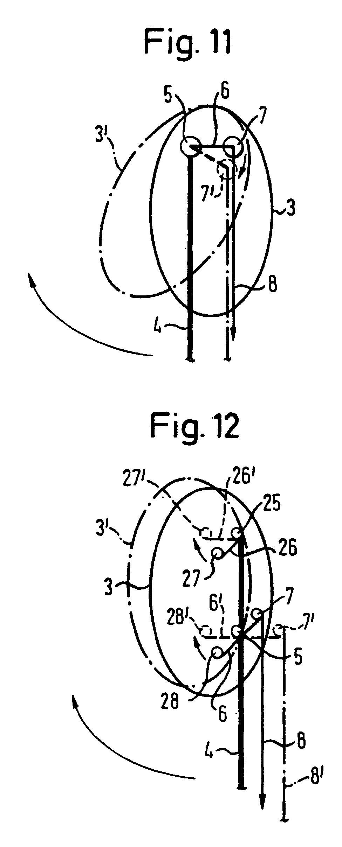

Weitere Möglichkeiten, die Kopfstütze 3 verstellbar zu lagern, sind in den Figuren 11 und 12 dargestellt. Bei der in Fig. 11 dargestellten Lagerung der Kopfstütze 3 ist die Schwenklagerung 5 im Bereich des oberen Endes der Kopfstütze 3 und in Fahrzeuglängsrichtung vor der Befestigung 7 angeordnet. In der Ausgangsstellung erstreckt sich der Hebel 6 horizontal ausgerichtet von der Schwenklagerung 5 zur Befestigung 7. Wenn das Zugelement 8 nach unten verlagert wird, schwenkt die Kopfstütze 3 um die Schwenklagerung 5, so daß sich das untere Ende der Kopfstütze 3 stark nach vorn verlagert und die mit strichpunktierten Linien dargestellte Endlage einnimmt. Die Bezugszeichen der sich in der Endstellung befindlichen Teilen sind jeweils mit einem Apostroph versehen.

Die in Fig. 12 dargestellte Kopfstütze 3 ist über einen oberen, einarmigen Hebel 26 und einen unteren, zweiarmigen Hebel 6 mit dem Rahmen 4 verbunden. Die Hebel 26 und 6 weisen zugehörige Schwenklagerungen 25 beziehungsweise 5 am Rahmen 4 auf und sind an Haltepunkten 27 beziehungsweise 28 an der Kopfstütze 3 schwenkbar befestigt. Das freie Ende des in Fahrzeuglängsrichtung hinteren Hebelarms des Hebels 6 weist die Befestigung 7 für das Zugelement 8 auf.

Bei Betätigung des Zugelements 8 schwenkt die Kopfstütze 3 in die mit 3' gekennzeichnete Stellung, d.h. in Fahrzeuglängsrichtung, wie durch die Pfeile angegeben, nach vorn und nach oben, da der Hebel 6 im Uhrzeigersinn geschwenkt wird. Der Hebel 26, der zur stabilen Lagerung der Kopfstütze 3 dient, schwenkt passiv mit. Die Bezugszeichen der sich in der Endstellung befindlichen Teile sind mit einem Apostroph versehen.

Der Kopf wird durch die sich selbsttätig verstellende Kopfstütze 3 rechtzeitig abgefangen und in Position gehalten, wodurch die Belastungen der Nackenwirbel und des Kopfes gegenüber einem Fahrzeugsitz ohne sich verstellende Kopfstütze deutlich verringert werden.

Im Bereich der Schwenklagerung 5 und im Bereich der Führungen 11 ist ferner eine nicht gezeigte Arretiervorrichtung vorgesehen, die die Kopfstütze 3 in der verstellten Position hält. Damit soll erreicht werden, daß der Kopf des Fahrzeuginsassen beim Heckaufprall auf eine lagefeste Kopfstütze 3 auftrifft. Die Arretiervorrichtung kann einen Klemmechanismus und/oder einen Rastmechanismus umfassen. Beispielsweise kann ein auslenkbarer Hebel in Verbindung mit einer Zahnscheibe, die an der Schwenklagerung 5 drehbar gelagert und an der Kopfstütze 3 befestigt ist, eine solche Arretiervorrichtung bilden. Der Massehebel kann bei der Verstellung der Kopfstütze 3 in Ausnehmungen in der Zahnscheibe eingreifen und die Kopfstütze 3 in ihrer vordersten Stellung blockieren. Eine andere Möglichkeit, eine Arretiervorrichtung auszubilden, besteht darin, daß der Verstellmechanismus bei der Verschwenkung der Kopfstütze 3 gegen einen Keil, oder umgekehrt, gedrückt und der Verstellmechanismus geklemmt wird.

Das Zugelement kann auch mit einem Getriebe gekoppelt sein, das beispielsweise in der Kopfstütze 3 integriert ist. Das Getriebe dient dazu, das Verhältnis des Verstellwegs der Kopfstütze 3 zur Strecke, um die die Befestigung 7 verschoben wird, zu ändern.

Zur Dämpfung der Bewegung der Kopfstütze kann ein Dämpfungselement vorgesehen sein, wie zum Beispiel das in den Zylinder 13 ragende Dämpfungselement 18 gemäß den Figuren 5 und 6 oder das zwischen dem Hebel 6 und dem Rahmen 4 gemäß den Figuren 9 und 10 befindliche Dämpfungselement 19. Durch ein Getriebe und Dämpfungselemente kann der Verstellweg und sein zeitlicher Verlauf verändert werden.

## Patentansprüche

1. Fahrzeugsitz mit einer an einer Rückenlehne verstellbar angeordneten Kopfstütze, die bei einem Heckaufprall des Fahrzeugs aus einer normalen Ausgangsstellung in eine an den Kopf des Insassen angenäherte Rückhaltestellung bewegbar ist, **dadurch gekennzeichnet, daß** sich durch das Innere der Rückenlehne (2) ein biegsames Zugelement (8) erstreckt, das die Bewegung eines sich bei einem Heckaufprall verlagernden Massekörpers (14) aufnimmt und eine Verschiebung einer kopfstützenseitigen Befestigung (7) des Zugelements (8) hervorruft, die in einem mit dem Zugelement (8) gekoppelten mechanischen Verstellmechanismus in eine Bewegung der Kopfstütze (3) zum Kopf des Insassen umgesetzt wird.

2. Fahrzeugsitz nach Anspruch 1, **dadurch gekennzeichnet, daß** das biegsame Zugelement (8) ein Band oder eine Gewebeeinlage im Fahrzeugsitz ist.

3. Fahrzeugsitz nach einem der vorstehenden Ansprüche, **dadurch gekennzeichnet, daß** die Kopfstütze (3) schwenkbar gelagert und das Zugelement (8) so angelenkt ist, daß es die Kopfstütze (3) bei einem Heckaufprall zum Kopf des Insassen schwenkt.

4. Fahrzeugsitz nach Anspruch 3, **dadurch gekennzeichnet, daß** die Schwenklagerung (5) in der Kopfstütze (3) integriert ist.

5. Fahrzeugsitz nach Anspruch 3 oder 4, **dadurch gekennzeichnet, daß** das Zugelement (8) an der Kopfstütze (3) selbst oder an einem daran gekoppelten Hebel (6) befestigt ist.

6. Fahrzeugsitz nach Anspruch 1 oder 2, **dadurch gekennzeichnet, daß** der Verstellmechanismus eine Führung (11) für die längs der Führung (11) verstellbare Kopfstütze (3) umfaßt.

7. Fahrzeugsitz nach Anspruch 6, **dadurch gekennzeichnet, daß** die Kopfstütze (3) in einer in der Rückenlehne (2) vorgesehenen Linearführung gehaltert ist, die schräg aufwärts in Richtung Kopf des Insassen gerichtet ist.

8. Fahrzeugsitz nach einem vorstehenden Ansprüche, **dadurch gekennzeichnet, daß** die vom Zugelement (8) aufgenommene Bewegung eine Verschwenkung der Rückenlehne (2) bei einem Heckaufprall relativ zum Fahrzeug nach hinten ist.

9. Fahrzeugsitz nach Anspruch 8, **dadurch gekennzeichnet, daß** das Zugelement (8) mit seinem fahrzeugbodenseitigen Ende (9) an einem fahrzeugfesten Teil befestigt ist und ein Mitnehmer (16) an der Rückenlehne (2) das Zugelement (8) bei der Verschwenkung erfaßt und verlagert.

10. Fahrzeugsitz nach einem der Ansprüche 1 bis 7, **dadurch gekennzeichnet, daß** ein relativ zum Fahrzeugsitz beweglicher, translatorisch geführter Massekörper (14) vorgesehen ist, an den das Zugelement (8) gekoppelt ist.

11. Fahrzeugsitz nach einem der Ansprüche 1 bis 7, **dadurch gekennzeichnet, daß** die vom Zugelement (8) aufgenommene Bewegung eine translatorische Verschiebung des Fahrzeugsitzes relativ zum Fahrzeug nach hinten ist.

12. Fahrzeugsitz nach Anspruch 11, **dadurch gekennzeichnet, daß** das Zugelement (8) mit seinem fahrzeugbodenseitigen Ende (9) an einem fahrzeugfesten Teil befestigt ist und ein Mitnehmer (17) am Sitzteil (1) das Zugelement (8) bei der Verschiebung erfaßt und verlagert.

13. Fahrzeugsitz nach einem der vorstehenden Ansprüche, **dadurch gekennzeichnet, daß** das Zugelement (8) durch das Innere der Rückenlehne (2) gespannt ist, durch das Eindrücken des Insassen in die Rückenlehne (2) bei einem Heckaufprall durchgebogen wird und so die Verschiebung der kopfstützenseitigen Befestigung (7) des Zugelements (8) hervorruft oder unterstützt.

14. Fahrzeugsitz nach einem der vorstehenden Ansprüche, **dadurch gekennzeichnet, daß** eine Arretiervorrichtung vorgesehen ist, die die Kopfstütze (3) in der verstellten Position hält.

15. Fahrzeugsitz nach Anspruch 14, **dadurch gekennzeichnet, daß** die Arrtiervorrichtung einen Klemmechanismus und/oder einen Rastmechanismus umfaßt.

16. Fahrzeugsitz nach einem der vorstehenden Ansprüche, **dadurch gekennzeichnet, daß** ein an das Zugelement (8) gekoppeltes Getriebe vorgesehen ist, zum Ändern des Verhältnisses des Verstellwegs der Kopfstütze (3) zur Strecke, um die die Befestigung (7) verschoben wird.

17. Fahrzeugsitz nach einem der vorstehenden Ansprüche, **dadurch gekennzeichnet, daß** ein Dämpfungselement (18, 19) vorgesehen ist, das die Bewegung der Kopfstütze (3) dämpft.

## Claims

1. A vehicle seat comprising a headrest which is adjustably arranged on a back rest and is adapted to be moved, in the event of a rear end impact of the vehicle, from a normal initial position into a restraint position approximated to the head of the occupant, **characterized in that** a flexible traction element (8) extends through the interior of the back rest (2), which takes up the movement of an inertial mass (14) shifted in the event of a rear end impact and causes a displacement of an attachment (7) of the traction element (8) on the headrest, said displacement being converted in a mechanical adjusting mechanism coupled with the traction element (8) into a movement of the headrest (3) towards the head of the vehicle occupant.

2. The vehicle seat as claimed in claim 1, **characterized in that** the flexible traction element (8) is a tape or a fabric inlay within the vehicle seat.

3. The vehicle seat as claimed in either of the preceding claims, **characterized in that** the headrest (3) is pivotally mounted and the traction element (8) is coupled in such a manner that it pivots the headrest (3) towards the head of the occupant in the case of a rear end impact.

4. The vehicle seat as claimed in claim 3, **characterized in that** the pivotal mounting means (5) is integrated in the headrest (3).

5. The vehicle seat as claimed in claim 3 or in claim 4, **characterized in that** the traction element (8) is attached to the headrest (3) itself or to a lever (6) coupled thereto.

6. The vehicle seat as claimed in claim 1 or in claim 2, **characterized in that** the adjusting mechanism includes a guide (11) for the headrest (3), the headrest being adjustable along the guide (11).

7. The vehicle seat as claimed in claim 6, **characterized in that** the headrest (3) is held in a linear guide provided in the back rest (2), the linear guide being directed obliquely upwards towards the head of the occupant.

8. The vehicle seat as claimed in any of the preceding claims, **characterized in that** the movement taken up by the traction element (8) is a rearward pivoting movement of the back rest (2) in relation to the vehicle in the case of a rear end impact.

9. The vehicle seat as claimed in claim 8, **characterized in that** the traction element (8) is attached at its end (9) which is adjacent to the vehicle floor to a vehicle-fixed part and that an entrainment means (16) on the back rest (2) engages the traction element (8) during pivoting and dislocates it.

10. The vehicle seat as claimed in any of the claims 1 to 7, **characterized in that** an inertial mass (14) is provided, which is adapted to be moved in relation to the vehicle seat and is translationally guided, said traction element (8) being coupled to the inertial mass.

11. The vehicle seat as claimed in any of the claims 1 to 7, **characterized in that** the movement taken up by the traction element (8) is a rearward translational displacement of the vehicle seat in relation to the vehicle.

12. The vehicle seat as claimed in claim 11, **characterized in that** the traction element (8) is attached at its end which is adjacent to the vehicle floor to a vehicle-fixed part and that an entrainment means (17) on the seating part (1) engages the traction element (8) during the displacement and dislocates it.

13. The vehicle seat as claimed in any of the preceding claims, **characterized in that** the traction element (8) extends in the interior of the back rest (2) in a tensioned condition and is arched by the vehicle occupant impressing into the back rest (2) in the case of a rear end impact, thereby causing or assisting the displacement of the attachment (7) of the traction element (8) on the headrest.

14. The vehicle seat as claimed in any of the preceding claims, **characterized in that** a locking device is provided to arrest the headrest (3) in the shifted position.

15. The vehicle seat as claimed in claim 14, **characterized in that** the locking device comprises a clamping mechanism and/or a latching mechanism.

16. The vehicle seat as claimed in any of the preceding claims, **characterized in that** a gear coupled with the traction element (8) is provided for changing the ratio between the shift length of the headrest (3) and the distance across which the attachment (7) is displaced.

17. The vehicle seat as claimed in any of the preceding claims, **characterized in that** a damping element (18, 19) is provided to damp the movement of the headrest (3).

## Revendications

1. Siège de véhicule comprenant un appuie-tête agencé de manière réglable sur un dossier, l'appuie-tête étant déplaçable, en cas de choc à l'arrière du véhicule, depuis une position initiale normale jusque dans une position de retenue approchée de la tête du passager, **caractérisé en ce qu'**à travers l'intérieur du dossier (2) s'étend un élément de traction flexible (8) qui absorbe le mouvement d'un corps formant masse (14) déporté en cas de choc à l'arrière, et qui provoque le déplacement d'un moyen de fixation (7), côté appuie-tête, de l'élément de traction (8), ledit déplacement étant transformé par un dispositif de réglage mécanique relié à l'élément de traction (8), en un mouvement de l'appuie-tête vers la tête du passager.

2. Siège de véhicule selon la revendication 1, **caractérisé en ce que** l'élément de traction flexible (8) est une bande ou une garniture en tissu placée dans le siège de véhicule.

3. Siège de véhicule selon l'une quelconque des revendications précédentes, **caractérisé en ce que** l'appuie-tête (3) est monté pivotant et l'élément de traction (8) est articulé de façon qu'en cas de choc à l'arrière, l'appuie-tête (3) pivote vers la tête de l'occupant.

4. Siège de véhicule selon la revendication 3, **caractérisé en ce que** le point de pivotement (5) est intégré à l'appuie-tête (3).

5. Siège de véhicule selon la revendication 3 ou 4, **caractérisé en ce que** l'élément de traction (8) est fixé à l'appuie-tête (3) proprement dit ou à un levier (6) qui y est accouplé.

6. Siège de véhicule selon la revendication 1 ou 2, **caractérisé en ce que** le dispositif de réglage comprend un guide (11) pour l'appuie-tête (3) déplaçable le long du guide (11).

7. Siège de véhicule selon la revendication 6, **caractérisé en ce que** l'appuie-tête (3) est maintenu dans un guide linéaire qui est prévu dans le dossier (2) et qui est incliné vers le haut en direction de la tête de l'occupant.

8. Siège de véhicule selon l'une quelconque des revendications précédentes, **caractérisé en ce que** le mouvement absorbé par l'élément de traction (8) est un pivotement du dossier (2) vers l'arrière par rapport au véhicule en cas de choc à l'arrière.

9. Siège de véhicule selon la revendication 8, **caractérisé en ce que** l'élément de traction (8) est fixé avec son extrémité (9) côté plancher du véhicule et un moyen d'entraînement (16) sur le dossier (2) intercepte et déplace l'élément de traction (8) lors du pivotement.

10. Siège de véhicule selon l'une quelconque des revendications 1 à 7, **caractérisé en ce qu'**il est prévu un corps formant masse (14) qui est mobile par rapport au siège de véhicule et qui est guidé en translation et auquel est accouplé l'élément de traction (8).

11. Siège de véhicule selon l'une quelconque des revendications 1 à 7, **caractérisé en ce que** le mouvement absorbé par l'élément de traction (8) est une translation du siège de véhicule vers l'arrière par rapport au véhicule.

12. Siège de véhicule selon la revendications 11, **caractérisé en ce que** l'élément de traction (8) est fixé à un élément solidaire du véhicule par son extrémité (9) côté plancher du véhicule, et un moyen d'entraînement (17) disposé sur l'assise (1) intercepte et déplace l'élément de traction (8) lors de la translation.

13. Siège de véhicule selon l'une quelconque des revendications précédentes, **caractérisé en ce que** l'élément de traction (8) est tendu à travers l'intérieur du dossier (2), fléchi par l'enfoncement de l'occupant dans le dossier (2) en cas de choc à l'arrière et provoque ainsi ou amplifie le déplacement du moyen de fixation (7) côté appuie-tête, de l'élément de traction (8).

14. Siège de véhicule selon l'une quelconque des revendications précédentes, **caractérisé en ce qu'**il est prévu un dispositif d'arrêt qui maintient l'appuie-tête (3) en position réglée.

15. Siège de véhicule selon la revendication 14, **caractérisé en ce que** le dispositif d'arrêt comprend un mécanisme de serrage et/ou un mécanisme de crantage.

16. Siège de véhicule selon l'une quelconque des revendications précédentes, **caractérisé en ce qu'**il est prévu un engrenage accouplé à l'élément de traction (8) pour modifier le rapport entre la course de déplacement de l'appuie-tête (3) et le trajet parcouru par le moyen de fixation (7).

17. Siège de véhicule selon l'une quelconque des revendications précédentes, **caractérisé en ce qu'**il est prévu un élément amortisseur (18, 19) qui amortit le mouvement de l'appuie-tête (3).
